# EUROPÄISCHE PATENTANMELDUNG

(11) **EP 2 930 354 A1**
(43) Veröffentlichungstag der Anmeldung: **14.10.2015**
(21) Anmeldenummer: 14164226.4
(22) Anmeldetag: 10.04.2014
(51) Int. Cl.: F03D 11/00, F03D 1/06

(54) **Windenergieanlagenrotorblatt mit einem Blitzschutzleiter**

(71) Anmelder: Nordex Energy GmbH, 22419 Hamburg (DE)
(72) Erfinder: Rehm, Wolfgang Dr., DE - 93053 Regensburg (DE)
(74) Vertreter: Hauck Patentanwaltspartnerschaft mbB

(57) **Zusammenfassung**

Windenergieanlagenrotorblatt mit einem Blitzschutzleiter, einer weiteren elektrischen Leitung, die galvanisch von dem Blitzschutzleiter getrennt ist, und einem Potentialausgleichselement, das den Blitzschutzleiter mit der weiteren elektrischen Leitung verbindet, dadurch gekennzeichnet, dass das Potentialausgleichselement eine Vakuumschaltkammer mit einem ersten Kontaktstück, das mit dem Blitzschutzleiter verbunden ist, und einem zweiten Kontaktstück, das mit der weiteren elektrischen Leitung verbunden ist, aufweist.

## Beschreibung

Die Erfindung betrifft ein Windenergieanlagenrotorblatt mit einem Blitzschutzleiter und einer weiteren elektrischen Leitung, die galvanisch von dem Blitzschutzleiter getrennt und über ein Potentialausgleichselement damit verbunden ist.

Es ist bekannt, Windenergieanlagenrotorblätter mit einer Blitzschutzeinrichtung vor Schäden durch Blitzschlag zu bewahren. Hierzu wird in der Regel im Bereich der Blattspitze ein Blitzschutzrezeptor angeordnet. Der Strom eines in den Blitzschutzrezeptor einschlagenden Blitzes wird dann über einen Blitzschutzleiter zur Blattwurzel hin und von dort über die Gondel und den Turm der Windenergieanlage in den Erdboden abgeleitet. Besondere Schwierigkeiten entstehen, wenn innerhalb des Windenergieanlagenrotorblatts mehrere elektrisch leitfähige Elemente mehr oder weniger parallel angeordnet sind. Infolge der hohen Blitzströme kommt es dann durch elektromagnetische Induktion zu großen Potentialdifferenzen zwischen den unterschiedlichen elektrisch leitfähigen Elementen, die zu Überschlägen und dadurch zu einer Beschädigung oder gar Zerstörung des Windenergieanlagenrotorblatts führen können. Es ist bekannt, derartigen Überschlägen durch Potentialausgleichselemente entgegenzuwirken.

Hierzu können die leitfähigen Elemente über elektrische Leitungen miteinander verbunden werden. Beispielsweise zeigt die Druckschrift EP 1 692 752 B1 ein Windenergieanlagenrotorblatt, bei dem ein innenliegender, elektrisch leitfähiger Holm mit einem benachbart angeordneten Blitzschutzleiter verbunden ist. Hierzu sind Potentialausgleichselemente vorgesehen, die den Holm und den Blitzschutzleiter über eine elektrische Leitung miteinander verbinden. Der Kontakt zum Holm wird über ein leitfähiges, flächiges Band hergestellt.

Aus der Druckschrift EP 1 112 448 B2 ist ein Windenergieanlagenrotorblatt mit mehreren elektrisch leitfähigen Gurten aus einem Kohlenstofffasermaterial bekannt geworden. Die Gurte und ein zusätzlicher, metallischer Blitzschutzleiter sind an mehreren Längspositionen über Potentialausgleichelemente in Form von innenliegenden, elektrischen Leitern miteinander verbunden.

Eine galvanische Verbindung zwischen einem geerdeten Blitzschutzleiter und einer benachbart angeordneten, weiteren elektrischen Leitung kommt nicht in Betracht, wenn die weitere Leitung zur Übertragung elektrischer Leistung oder von Signalen dienen soll. In diesem Fall soll ein Potentialausgleich nur im Falle eines Blitzschlags erfolgen. Hierzu ist aus der Druckschrift WO 00/79128 A1 ein Windenergieanlagenrotorblatt mit einem zentral angeordneten Blitzschutzleiter und zwei weiteren elektrischen Leitungen bekannt geworden, die ebenfalls in Längsrichtung des Rotorblatts verlaufen und zur Bestromung einer elektrischen Heizeinrichtung dienen. Sie sind im Bereich der Blattspitze über Funkenstrecken mit dem zentralen Blitzschutzleiter verbunden.

Davon ausgehend ist es die Aufgabe der Erfindung, ein Windenergieanlagenrotorblatt mit einem Blitzschutzleiter und einer weiteren elektrischen Leitung, die galvanisch von dem Blitzschutzleiter getrennt ist, zur Verfügung zu stellen, das vor Beschädigungen durch Blitzschlag wirksam und dauerhaft geschützt ist.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat einen Blitzschutzleiter, eine weitere elektrische Leitung, die galvanisch von dem Blitzschutzleiter getrennt ist, und ein Potentialausgleichselement, das den Blitzschutzleiter mit dem weiteren elektrischen Leiter verbindet. Das Potentialausgleichselement weist eine Vakuumschaltkammer mit einem ersten Kontaktstück, das mit dem Blitzschutzleiter verbunden ist, und einem zweiten Kontaktstück, das mit der weiteren elektrischen Leitung verbunden ist, auf.

Das Windenergieanlagenrotorblatt kann für eine Windenergieanlage mit im Wesentlichen horizontaler Achse bestimmt sein. Es kann aus einem Faserverbundmaterial hergestellt sein, insbesondere aus zwei miteinander verbundenen Halbschalen. Es kann eine aerodynamische Hülle, die zum Beispiel von den Außenseiten der beiden Halbschalen gebildet ist, sowie einen oder mehrere Gurte aufweisen, beispielsweise aus glasfaser- oder kohlenstofffaserverstärktem Kunststoff. Die beiden Halbschalen können über einen oder mehrere Stege miteinander verbunden sein, die insbesondere zwischen zwei einander gegenüberliegenden Hauptgurten angeordnet sein können.

Der Blitzschutzleiter kann sich im Wesentlichen über die gesamte Länge des Windenergieanlagenrotorblatts erstrecken, insbesondere von einem Anschlusspunkt im Bereich der Blattwurzel bis in den Bereich der Blattspitze. Dort kann er mit einem an der Blattspitze angeordneten Blitzschutzrezeptor verbunden sein. Es können auch mehrere Blitzschutzleiter vorhanden sein, beispielsweise in annähernd paralleler Anordnung entlang einer Druckseite und einer Saugseite des Windenergieanlagenrotorblatts.

Eine Vakuumschaltkammer ist ein zum Schalten großer Stromstärken insbesondere im Mittelspannungsbereich bewährtes Bauelement. Sie weist zwei Kontaktstücke auf, die in einer evakuierten Kammer angeordnet sind. Im geschlossenen Schaltzustand berühren die beiden Kontaktstücke einander. Um den Stromkreis zu unterbrechen, können die beiden Kontaktstücke voneinander entfernt werden. Da die Kontaktstücke im Vakuum angeordnet sind, kann es dabei anders als bei Funkenstrecken nicht zu einer selbstständigen thermischen Gasentladung in Form eines Lichtbogens kommen. Darum kann mit Vakuumschaltkammern eine besonders zuverlässige Kontaktunterbrechung und ein langzeitstabiles Schaltverhalten erzielt werden. Die Erfinder haben erkannt, dass eine Vakuumschaltkammer zur Herstellung eines Potentialausgleichs zwischen einem Blitzschutzleiter und einer weiteren Leitung in einem Windenergieanlagenrotorblatt geeignet ist. Dazu wird ein erstes Kontaktstück der Vakuumschaltkammer mit dem Blitzschutzleiter und ein zweites Kontaktstück mit der weiteren elektrischen Leitung verbunden.

In einer Ausgestaltung sind die beiden Kontaktstücke in einem vorgegebenen Abstand voneinander befestigt. Die elektrische Verbindung zwischen dem Blitzschutzleiter und der weiteren elektrischen Leitung ist damit unterbrochen; die galvanische Trennung zwischen diesen beiden Elementen bleibt erhalten. Dies ist besonders vorteilhaft, wenn die weitere elektrische Leitung beispielsweise die Versorgungsleitung für ein Heizelement oder eine Signalleitung ist.

In Ausgestaltungen liegt der vorgegebene Abstand zwischen den beiden Kontaktstücken im Bereich von 0,5 mm bis 5 mm, bevorzugt im Bereich von etwa 1 mm bis etwa 2,5 mm. In diesem Fall kommt es bei den im Falle eines Blitzschlags auftretenden Potentialdifferenzen zu einem Überschlag zwischen den beiden Kontaktstücken und damit einhergehend zu dem gewünschten Potentialausgleich. Wegen ihrer hohen Strombelastbarkeit kann die Vakuumschaltkammer selbst bei häufig auftretenden Blitzschlägen dauerhaft eingesetzt werden, gegebenenfalls über die gesamte Lebensdauer des Windenergieanlagenrotorblatts hinweg. Sie ist zudem als vorgefertigtes, qualitätsgeprüftes Bauteil verfügbar und weitgehend wartungsfrei. Die Vakuumschaltkammer hat eine geringe Baugröße und kann daher besonders vorteilhaft im Bereich der Rotorblattspitze eingesetzt werden.

In einer Ausgestaltung ist eine Befestigungseinrichtung im Rotorblatt angeordnet, die die beiden Kontaktstücke in dem vorgegebenen Abstand voneinander hält. Für die bei typischen Anwendungen vorgesehenen Schaltvorgänge sind die beiden Kontaktstücke der Vakuumschaltkammer relativ zueinander beweglich angeordnet. In der Regel müssen die beiden Kontaktstücke unter Überwindung einer von dem Umgebungsdruck ausgeübten Kraft voneinander entfernt werden, um den Schaltkontakt zu öffnen. Bei der Erfindung wird eine Befestigungseinrichtung eingesetzt, die die beiden Kontaktstücke in dem vorgegebenen Abstand voneinander hält. Hierzu kann die Befestigungseinrichtung insbesondere eines der beiden Kontaktstücke um eine dem vorgegebenen Abstand entsprechende Strecke aus der Vakuumschaltkammer herausziehen bzw. in dieser herausgezogenen Stellung fixieren. Zugleich kann die Befestigungseinrichtung dazu ausgebildet sein, die Vakuumschaltkammer in dem Rotorblatt zu befestigen.

In einer Ausgestaltung ist die Vakuumschaltkammer für das Schalten von Stromstärken von 25 kA oder mehr ausgelegt. Beispielsweise kann sie auch für Stromstärken von 50 kA oder mehr ausgelegt sein. Versuche haben ergeben, dass Vakuumschaltkammern mit dieser Spezifikation für die äußerst kurzen Zeiträume eines Stromflusses bei einem Blitzschlag auch noch höhere Stromstärken von zum Beispiel bis zu 200 kA beschädigungsfrei überstehen.

In einer Ausgestaltung ist die Vakuumschaltkammer im Bereich einer Blattspitze des Windenergieanlagenrotorblatts angeordnet. Im Bereich der Blattspitze sind Blitzschläge besonders häufig, sodass hier mindestens ein Blitzschutzrezeptor angeordnet ist. Zugleich entstehen im Bereich der Blattspitze durch elektromagnetische Induktion besonders große Potentialdifferenzen zwischen benachbarten Leitern, sodass ein Potentialausgleichselement zur Verbindung des Blitzschutzleiters mit der weiteren Leitung eine besonders hohe Stromtragfähigkeit aufweisen muss.

In einer Ausgestaltung weist das Windenergieanlagenrotorblatt eine elektrische Heizeinrichtung auf, die über die weitere elektrische Leitung mit einem Heizstrom versorgt werden kann. In diesem Fall trägt der Einsatz einer Vakuumschaltkammer als Potentialausgleichselement zu einem wirksamen Schutz der elektrischen Heizeinrichtung bei.

In einer Ausgestaltung weist die Befestigungseinrichtung Befestigungsmittel auf, die eine Vergrößerung des Abstands zwischen den beiden Kontaktstücken im Falle eines Blitzschlags verhindern. Wie bereits erwähnt, bedarf es in der Regel einer erheblichen Kraft, um die beiden Kontaktstücke in der gewünschten Weise voneinander zu entfernen. Um sie in dieser Stellung zu fixieren, reicht es zunächst aus, zu verhindern, dass sich die Anschlussstange in den Vakuumschaltkammerkörper zurückbewegt. Im Falle eines Blitzschlags können jedoch auch erhebliche abstoßende Kräfte zwischen den beiden Kontaktstücken auftreten, die zu einer Vergrößerung des Abstands führen können, was den erwünschten Potentialausgleich gefährdet. Um dies zu verhindern, kann insbesondere eine weitere Bewegung der Anschlussstange aus dem Vakuumschaltkammerkörper heraus verhindert werden, zum Beispiel durch einen geeigneten Anschlag der Befestigungseinrichtung.

Die Erfindung wird nachfolgend anhand eines in Figuren dargestellten Ausführungsbeispiels näher erläutert. Es zeigen:
- Fig. 1: ein erfindungsgemäßes Windenergieanlagenrotorblatt in einer vereinfachten, perspektivischen Darstellung,
- Fig. 2: eine vereinfachte Querschnittsdarstellung durch eine Vakuumschaltkammer in einem Gehäuse.

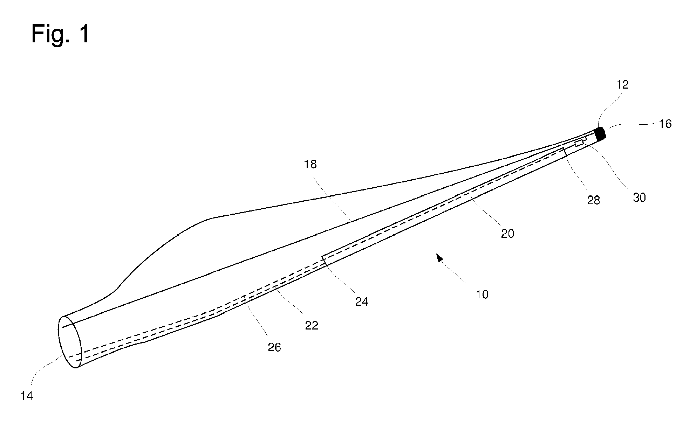

Das Windenergieanlagenrotorblatt 10 aus Fig. 1 hat eine Blattspitze 12 und eine Blattwurzel 14. Im Bereich der Blattspitze 12 ist ein Blitzschutzrezeptor 16 angeordnet. Dieser ist mit einer Blitzschutzleitung 18 verbunden, die zur Blattwurzel 14 führt.

Im Bereich einer Profilnasenkante ist an der Außenseite des Windenergieanlagenrotorblatts 10 eine elektrische Heizeinrichtung 20 angeordnet. Diese weist ein flächiges Heizelement aus einem Kohlenstofffasermaterial auf. Zur Stromversorgung der elektrischen Heizeinrichtung 20 gibt es eine erste elektrische Leitung 22, die von der Blattwurzel 14 zu einem blattwurzelseitigen Ende 24 der elektrischen Heizeinrichtung 20 führt. Eine weitere elektrische Leitung 26 dient ebenfalls zur Versorgung der elektrischen Heizeinrichtung 20 und führt von der Blattwurzel 14 bis zum blattspitzenseitigen Ende 28 der elektrischen Heizeinrichtung 20.

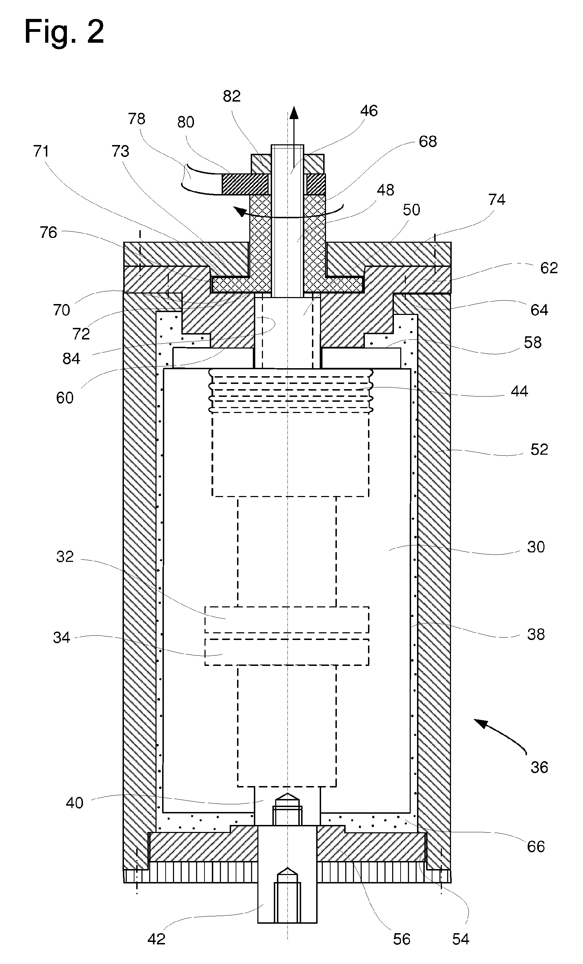

Im Bereich der Blattspitze 12 des Windenergieanlagenrotorblatts 10 ist zwischen der Blitzschutzleitung 18 und der elektrischen Leitung 26 ein Potentialausgleichselement angeordnet, welches eine Vakuumschaltkammer 30 aufweist. Ein erstes Kontaktstück 32 (siehe Fig. 2) der Vakuumschaltkammer 30 ist mit dem Blitzschutzleiter 18 verbunden. Ein zweites Kontaktstück 34 (siehe ebenfalls Fig. 2) ist mit der weiteren elektrischen Leitung 26 verbunden.

Einzelheiten zur Anordnung der Vakuumschaltkammer 30 im Bereich der Blattspitze 12 des Windenergieanlagenrotorblatts 10 sind besser in der Fig. 2 erkennbar. Die Vakuumschaltkammer 30 befindet sich im Inneren eines aus mehreren schraffiert dargestellten Teilen zusammengefügten Gehäuses 36. Sie weist einen Vakuumschaltkammerkörper 38 mit einer zylindrischen Grundform auf.

Das zweite Kontaktstück 34 ist fest mit dem Vakuumschaltkammerkörper 38 verbunden und weist ein von außen zugängliches Anschlussstück 40 auf, das mit einer Anschlussklemme 42 verbunden ist. Die Anschlussklemme 42 ist im Beispiel mit der weiteren elektrischen Leitung 26 (nicht dargestellt) verbunden.

Das erste Kontaktstück 32 ist beweglich in dem Vakuumschaltkammerkörper 38 gelagert und gegenüber dem Vakuumschaltkammerkörper 38 luftdicht mit einem metallischen Faltenbalg 44 abgedichtet. Aus dem Vakuumschaltkammerkörper 38 herausgeführt ist eine Anschlussstange 46, die einen Längsabschnitt 48 mit Gewinde und einen sich daran anschließenden Längsabschnitt 50 mit größerem Durchmesser als der Längsabschnitt 48 mit Gewinde aufweist. Die Anschlussstange 46 mit den beiden Längsabschnitten 48, 50 ist einteilig mit dem ersten Kontaktstück 32 ausgebildet. Der Längsabschnitt 50 mit dem größeren Durchmesser weist eine durch zwei gestrichelte Linien angedeutete seitliche Abflachung auf, welche eine Verdrehsicherung relativ zum Vakuumschaltkammerkörper 38 bewirkt. Der Längsabschnitt 50 mit größerem Durchmesser ist in einer Öffnung 84 des Lagerdeckels 62 angeordnet, die komplementär zum Querschnitt des Längsabschnitts 50 geformt ist, so dass die Abflachung des Längsabschnitts 50 eine Verdrehsicherung auch relativ zu dem Lagerdeckel 62 bewirkt.

Das Gehäuse 36 weist einen Gehäusegrundkörper 52 mit einem am unteren Ende ausgebildeten Innengewinde 54 auf. Ein unterer Gehäusedeckel 56 ist in das Innengewinde 54 eingeschraubt und spannt so den Vakuumschaltkammerkörper 38 in dem Gehäuse 36 ein. Eine Stirnseite 58 des Vakuumschaltkammerkörpers 38 liegt an einem ersten Anschlag 60 an, der an einer Innenseite eines Lagerdeckels 62 ausgebildet ist.

Am oberen Ende weist der Gehäusegrundkörper 52 einen nach innen weisenden Befestigungsflansch 64 auf, der mit dem Lagerdeckel 62 verschraubt ist.

Ein Freiraum zwischen dem Vakuumschaltkammerkörper 38 und dem Gehäuse 36 ist mit einer punktiert angedeuteten Vergussmasse 66 ausgefüllt.

Eine Spannhülse 68 ist auf den Längsabschnitt 48 mit Gewinde der Anschlussstange 46 aufgeschraubt. Die Spannhülse 68 besitzt einen Flansch 76 mit einer Unterseite 70 und einer Oberseite 71. Die Unterseite 70 des Flansches 76 liegt an einer im Lagerdeckel 62 ausgebildeten Stufe, die einen zweiten Anschlag 72 bildet, an, so dass beim Aufschrauben der Spannhülse 68 die Anschlussstange 46 aus dem Vakuumschaltkammerkörper 38 herausgezogen wird und zwischen dem ersten Kontaktstück 32 und dem zweiten Kontaktstück 34 ein Spalt entsteht. Die Spannhülse 68 kann so weit auf den Längsabschnitt 48 der Anschlussstange 46 aufgeschraubt werden, bis die Oberseite des Längsabschnitts 50 an der Unterseite 70 des Flansches 76 anliegt. In diesem Montagezustand ist die Anschlussstange 46 exakt um ein von der Geometrie des Gehäuses 36 vorgegebenes Maß aus dem Vakuumschaltkammerkörper 38 herausgezogen, sodass zwischen dem ersten Kontaktstück 32 und dem zweiten Kontaktstück 34 ein vorgegebener Abstand von im Beispiel etwa 2 mm eingehalten wird. Nach dem in der Fig.2 dargestellten Montagezustand kann der Abstand zwischen dem ersten und zweiten Kontaktstück noch vergrößert werden.

Oberhalb des Lagerdeckels 62 ist ein Gegenlagerdeckel 74 befestigt, dessen Unterseite 73 an der Oberseite 71 eines Flansches 76 der Spannhülse 68 anliegt. Die Unterseite 73 des Gegenlagerdeckels 74 bildet einen Anschlag für den Flansch 76 der Spannhülse 68. Dadurch wird verhindert, dass sich die Anschlussstange 46 aus dem Vakuumschaltkörper 38 herausschiebt und sich die beiden Kontaktstücke bei einem Blitzstromdurchgang auseinander bewegen.

Ein Kabel 78 ist oberhalb der Spannhülse 68 mit einem Kabelauge 80 auf die Anschlussstange 46 aufgesetzt und klemmend mit einer Mutter 82 befestigt. Das Kabel 78 dient im Beispiel zur Verbindung mit dem Blitzschutzleiter 18.

Das Gehäuse 36 mit der Vakuumschaltkammer 30 kann im Bereich der Blattspitze 12 des Windenergieanlagenrotorblatts 10 auf beliebige Art und Weise befestigt werden, beispielsweise mit Klebeharz an einer Innenseite einer Rotorblatthalbschale.

### Liste der verwendeten Bezugszeichen:

- 10: Windenergieanlagenrotorblatt
- 12: Blattwurzel
- 14: Blattspitze
- 16: Blitzschutzrezeptor
- 18: Blitzschutzleiter
- 20: elektrische Heizeinrichtung
- 22: erste elektrische Leitung
- 24: blattwurzelseitiges Ende der Heizeinrichtung
- 26: weitere elektrische Leitung
- 28: blattspitzenseitiges Ende der Heizeinrichtung
- 30: Vakuumschaltkammer
- 32: erstes Kontaktstück
- 34: zweites Kontaktstück
- 36: Gehäuse
- 38: Vakuumschaltkammerkörper
- 40: Anschlussstück
- 42: Anschlussklemme
- 44: Faltenbalg
- 46: Anschlussstange
- 48: Längsabschnitt mit Gewinde
- 50: Längsabschnitt mit größerem Durchmesser
- 52: Gehäusegrundkörper
- 54: Innengewinde
- 56: unterer Gehäusedeckel
- 58: Stirnseite
- 60: erster Anschlag
- 62: Lagerdeckel
- 64: Befestigungsflansch
- 66: Vergussmasse
- 68: Spannhülse
- 70: Unterseite der Spannhülse
- 71: Oberseite des Flansches der Spannhülse
- 72: zweiter Anschlag
- 73: Unterseite Gegenlagerdeckel
- 74: Gegenlagerdeckel
- 76: Flansch der Spannhülse
- 78: Kabel
- 80: Kabelauge
- 82: Mutter
- 84: Öffnung

## Patentansprüche

1. Windenergieanlagenrotorblatt (10) mit einem Blitzschutzleiter (18), einer weiteren elektrischen Leitung (26), die galvanisch von dem Blitzschutzleiter (18) getrennt ist, und einem Potentialausgleichselement, das den Blitzschutzleiter (18) mit der weiteren elektrischen Leitung (26) verbindet, **dadurch gekennzeichnet, dass** das Potentialausgleichselement eine Vakuumschaltkammer (30) mit einem ersten Kontaktstück (32), das mit dem Blitzschutzleiter (18) verbunden ist, und einem zweiten Kontaktstück (34), das mit der weiteren elektrischen Leitung (26) verbunden ist, aufweist.

2. Windenergieanlagenrotorblatt (10) nach Anspruch 1, **dadurch gekennzeichnet, dass** das erste Kontaktstück (32) und das zweite Kontaktstück (34) in einem vorgegebenen Abstand voneinander befestigt sind.

3. Windenergieanlagenrotorblatt (10) nach Anspruch 1 oder 2, **dadurch gekennzeichnet, dass** der vorgegebene Abstand im Bereich von 0,5 mm bis 5 mm liegt.

4. Windenergieanlagenrotorblatt (10) nach Anspruch 3, **dadurch gekennzeichnet, dass** der vorgegebene Abstand im Bereich von 1 mm bis 2,5 mm liegt.

5. Windenergieanlagenrotorblatt (10) nach einem der Ansprüche 1 bis 4, **dadurch gekennzeichnet, dass** eine Befestigungseinrichtung im Rotorblatt angeordnet ist, die die beiden Kontaktstücke (32, 34) in dem vorgegebenen Abstand voneinander hält.

6. Windenergieanlagenrotorblatt (10) nach einem der Ansprüche 1 bis 5, **dadurch gekennzeichnet, dass** die Vakuumschaltkammer (30) für das Schalten von Stromstärken von 25 kA oder mehr ausgelegt ist.

7. Windenergieanlagenrotorblatt (10) nach einem der Ansprüche 1 bis 6, **dadurch gekennzeichnet, dass** die Vakuumschaltkammer (30) im Bereich einer Blattspitze (14) des Windenergieanlagenrotorblatts (10) angeordnet ist.

8. Windenergieanlagenrotorblatt (10) nach einem der Ansprüche 1 bis 7, **dadurch gekennzeichnet, dass** das Windenergieanlagenrotorblatt (10) eine elektrische Heizeinrichtung (20) aufweist, die über die weitere elektrische Leitung (26) mit einem Heizstrom versorgt werden kann.

9. Windenergieanlagenrotorblatt (10) nach einem der Ansprüche 1 bis 8, **dadurch gekennzeichnet, dass** die Befestigungseinrichtung Mittel aufweist, die eine Vergrößerung des Abstands zwischen den beiden Kontaktstücken (32, 34) im Falle eines Blitzschlags verhindern.
